# EUROPEAN PATENT SPECIFICATION

(11) **EP 3 987 395 B1**
(45) Date of publication and mention of the grant of the patent: **18.10.2023**
(21) Application number: 20849048.2
(22) Date of filing: 23.06.2020
(51) Int. Cl.: G06F 9/455, G06F 9/48, G06F 9/50, G06F 8/41

(54) **ELECTRONIC DEVICE FOR EXECUTING INSTRUCTIONS USING PROCESSOR CORES AND VARIOUS VERSIONS OF INSTRUCTION SET ARCHITECTURES**
ELEKTRONISCHE VORRICHTUNG ZUR AUSFÜHRUNG VON BEFEHLEN UNTER VERWENDUNG VON PROZESSORKERNEN UND VERSCHIEDENEN VERSIONEN VON BEFEHLSSATZARCHITEKTUREN
DISPOSITIF ÉLECTRONIQUE POUR EXÉCUTER DES INSTRUCTIONS À L'AIDE DE COEURS DE PROCESSEUR ET DE DIVERSES VERSIONS D'ARCHITECTURES D'ENSEMBLES D'INSTRUCTIONS

(30) Priority: 07.08.2019 KR 20190096214
(43) Date of publication of application: 27.04.2022
(73) Proprietor: Samsung Electronics Co., Ltd., Suwon-si, Gyeonggi-do 16677 (KR)
(72) Inventor: CHA, Hyun Joon, Suwon-si, Gyeonggi-do 16677 (KR); SEOK, Hyunchul, Suwon-si, Gyeonggi-do 16677 (KR); CHO, Daehyun, Suwon-si, Gyeonggi-do 16677 (KR); KANG, Mooncheol, Suwon-si, Gyeonggi-do 16677 (KR); YI, Sangmin, Suwon-si, Gyeonggi-do 16677 (KR); LEE, Hyunkyu, Suwon-si, Gyeonggi-do 16677 (KR); HWANG, Boram, Suwon-si, Gyeonggi-do 16677 (KR)
(74) Representative: HGF
(86) International application number: PCT/KR2020/008105
(87) International publication number: WO 2021/025284

(56) References cited:
- EP-A1- 1 324 191
- US-A1- 2013 254 783
- US-A1- 2014 082 253
- US-A1- 2014 244 983
- US-A1- 2018 217 659
- US-A1- 2018 217 659
- US-A1- 2019 129 489
- US-A1- 2019 129 489
- GEORGAKOUDIS GIORGIS ET AL: "Fast Dynamic Binary Rewriting for flexible thread migration on shared-ISA heterogeneous MPSoCs", 2014 INTERNATIONAL CONFERENCE ON EMBEDDED COMPUTER SYSTEMS: ARCHITECTURES, MODELING, AND SIMULATION (SAMOS XIV), IEEE, 14 July 2014 (2014-07-14), pages 156-163, XP032636988, DOI: 10.1109/SAMOS.2014.6893207 [retrieved on 2014-09-05]
- Anonymous: "Executable and Linkable Format - Wikipedia", , 21 January 2016 (2016-01-21), XP055720934, Retrieved from the Internet: URL:https://en.wikipedia.org/w/index.php?t itle=Executable_and_Linkable_Format&oldid= 700883159 [retrieved on 2020-08-07]

## Description

### Technical Field

The disclosure relates to an electronic device configured to execute instructions using a processor having a plurality of cores and an instruction set architecture (ISA).

### Background Art

An instruction set architecture (ISA) may refer, for example, to a set of instructions written in a machine language that a processor can understand and execute. The processor may include a plurality of cores capable of understanding and executing machine language instructions written based on different versions of ISA. For example, the first core can understand and execute machine language instructions written using the addition operation included in ISA v1 (here, 'v' denotes a version), and the second core can understand and execute machine language instructions written using the addition operation or multiplication operation included in ISA v2. In this case, the first core cannot understand machine language instructions written using the multiplication operation.

An electronic device can provide compatibility that allows all cores to execute instructions by compiling executable files with an ISA (e.g., the lowest version of ISA) commonly readable (or understandable) in all cores. However, this compilation method may cause excessive power consumption due to a low speed or long time for processing instructions even when the electronic device has a core with excellent performance. Also, even if compilation is made with the lowest version of ISA, a core that does not have the corresponding version of ISA may be included in the processor. Then, this core may be useless when a specific instruction is executed.

"Fast Dynamic Binary Rewriting for flexible thread migration on shared-ISA heterogeneous MPSoCs", Giorgis Georgakoudic et al, 2014 Internal Conference on Embedded Computer Systems: Architectures, Modeling, and Simulation (SAMOS XIV), 14 July 2014 discloses Dynamic Binary Rewriting (DBR) and Dynamic Binary Translation (DBT) techniques for flexible thread migration.

US 2019/129489 A1 discloses a system comprising a high-feature processor and a low-feature processor. A hardware abstraction layer emulates opcodes not supported on the low-feature processor. The high-feature processor is instrumented with monitors to assist in the determination of when to switch to the low-feature processor. While operating on the low-feature processor, if an operation that is not implemented is encountered, or if the use of emulating instruction exceeds a threshold, an exception mechanism forces a switch back to the high-feature processor.

US2018/0217659 A1 discloses a processor including multiple dissimilar processor cores that implement different portions of instruction set architecture.

### Disclosure of Invention

### Technical Problem

Embodiments of the disclosure provide an electronic device that selects, based on version information of an ISA used in compiling an executable file, a core that has selectively used various versions of ISAs in compiling and will process instructions of the executable file. Thus, the electronic device may provide compatibility to process instructions without error in execution regardless of the ISA version, thereby improving a processing speed, and reducing power consumption.

### Solution to Problem

The invention is set out in the appended set of claims.

### Advantageous Effects of Invention

According to various examples of the disclosure, the electronic device may selectively use cores and various versions of ISAs when executing instructions, thereby improving a processing speed and reducing power consumption while preventing and/or reducing errors in execution.

### Brief Description of Drawings

The above and other aspects, features and advantages of the present disclosure will be more apparent from the following detailed description, taken in conjunction with the accompanying drawings, in which:
FIG. 1 is a block diagram illustrating an example electronic device in a network environment according to various examples;
FIG. 2 is a block diagram illustrating an example electronic device configured to support instruction processing according to various examples;
FIG. 3 is a diagram illustrating example ISAs of a processor according to various examples;
FIG. 4 is a diagram illustrating example operations of a compiler according to various examples;
FIG. 5 is a diagram illustrating example operations of a compiler according to various examples;
FIG. 6 is a diagram illustrating example operations of a compiler according to various examples;
FIG. 7 is a diagram illustrating example operations of a scheduler according to various examples;
FIG. 8 is a flowchart illustrating example operations of a processor according to various examples;
FIG. 9 is a flowchart illustrating operations of a processor according to an embodiment of the invention; and
FIG. 10 is a flowchart illustrating example operations of a processor according to various examples.

### Mode for the Invention

Various examples of the disclosure will be described in greater detail with reference to the accompanying drawings.

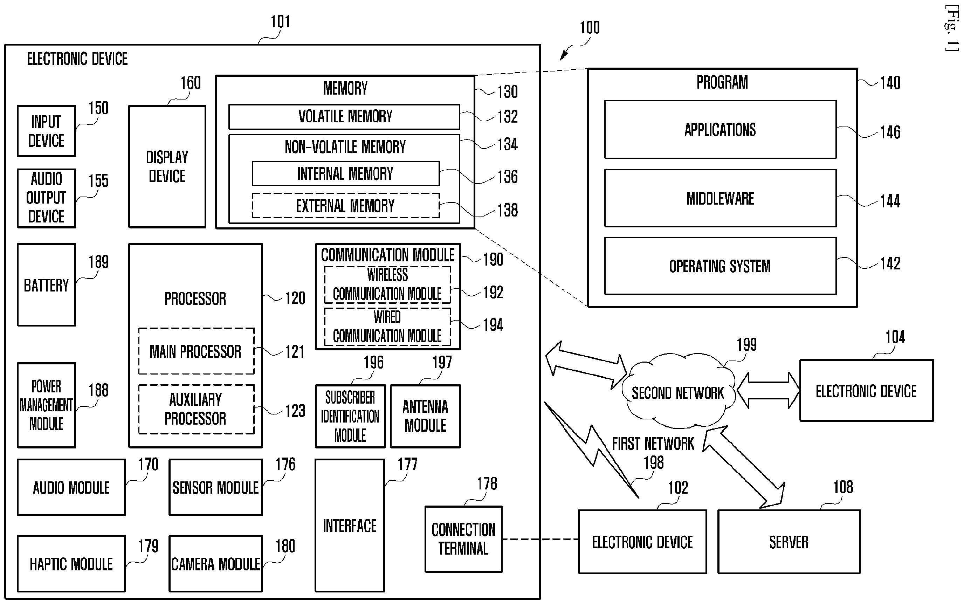

Fig. 1 is a block diagram illustrating an electronic device 101 in a network environment 100 according to various examples. Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an example, the electronic device 101 may communicate with the electronic device 104 via the server 108. According to an example, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some examples, at least one (e.g., the display device 160 or the camera module 180) of the components may be omitted from the electronic device 101, or one or more other components may be added in the electronic device 101. In some examples, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to an example , as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an example, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an example, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an example, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an example, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an example, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an example, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an - example, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an example, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an example, the haptic module 179 may include, for example, a motor, a piezoelectric element, or an electric stimulator.

The camera module 180 may capture a still image or moving images. According to an example, the camera module 180 may include one or more lenses, image sensors, image signal processors, or flashes.

The power management module 188 may manage power supplied to the electronic device 101. According to an example, the power management module 188 may be implemented as at least part of, for example, a power management integrated circuit (PMIC).

The battery 189 may supply power to at least one component of the electronic device 101. According to an example, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an example, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an example, the antenna module 197 may include an antenna including a radiating element including a conductive material or a conductive pattern formed in or on a substrate (e.g., PCB). According to an example, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an example, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an example, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

The electronic device according to various examples may be one of various types of electronic devices. The electronic devices may include, for example, a portable communication device (e.g., a smartphone), a computer device, a portable multimedia device, a portable medical device, a camera, a wearable device, or a home appliance. According to an example of the disclosure, the electronic devices are not limited to those described above.

It should be appreciated that various example examples of the present disclosure and the terms used therein are not intended to limit the technological features set forth herein to particular examples and include various changes, equivalents, or replacements for a corresponding example. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used herein, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an example, the module may be implemented in a form of an application-specific integrated circuit (ASIC).

Various examples as set forth herein may be implemented as software (e.g., the program 140) including one or more instructions that are stored in a storage medium (e.g., internal memory 136 or external memory 138) that is readable by a machine (e.g., the electronic device 101). For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an example, a method according to various examples of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various examples, each component (e.g., a module or a program) of the above-described components may include a single entity or multiple entities. According to various examples, one or more of the above-described components may be omitted, or one or more other components may be added. Alternatively or additionally, a plurality of components (e.g., modules or programs) may be integrated into a single component. In such a case, according to various examples, the integrated component may still perform one or more functions of each of the plurality of components in the same or similar manner as they are performed by a corresponding one of the plurality of components before the integration. According to various examples, operations performed by the module, the program, or another component may be carried out sequentially, in parallel, repeatedly, or heuristically, or one or more of the operations may be executed in a different order or omitted, or one or more other operations may be added.

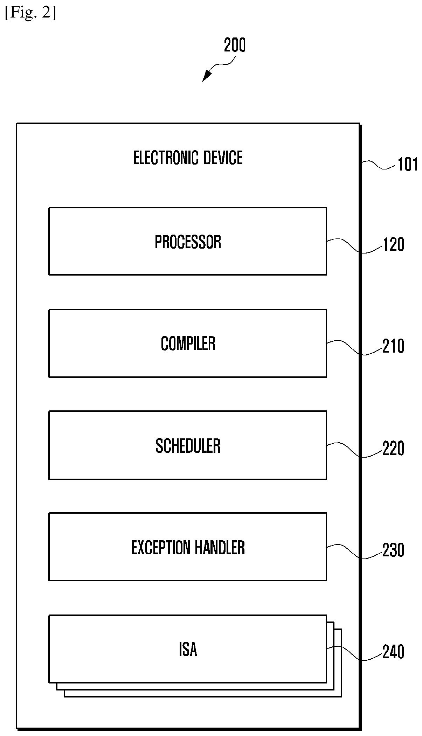

FIG. 2 is a block diagram 200 illustrating an example electronic device 101 configured to support instruction processing according to various examples.

Referring to FIG. 2, the electronic device 101 may include a processor (e.g., including processing circuitry) 120, a compiler (e.g., including processing circuitry and/or executable program elements) 210, a scheduler (e.g., including processing circuitry and/or executable program elements) 220, an exception handler (e.g., including processing circuitry and/or executable program elements) 230, and/or instruction set architectures (ISAs) (e.g., including instructions) 240. The processor 120 may include various processing circuitry and be a computing resource used by at least one of the compiler 210, the scheduler 220, and/or the exception handler 230. For example, the nonvolatile memory 134 shown in FIG. 1 may store at least one of the compiler 210, the scheduler 220, or the exception handler 230. The compiler 210, the scheduler 220, and/or the exception handler 230 may be loaded from the nonvolatile memory 134 shown in FIG. 1 to the volatile memory 132 shown in FIG. 1 and executed by the processor 120.

The processor 120 (e.g., the main processor 121) may include a heterogeneous multi processer (HMP) that includes cores having different versions of ISA. For example, the cores of the HMP can understand (e.g., decode) and execute instructions compiled using different versions of ISA, respectively. The processor 120 may include, for example, and without limitation, `ARM big.LITTLE' as an example of the HMP. The `ARM big.LITTLE' has been developed by the Advanced Reduced Instruction Set Computer (RISC) Machine Architecture (ARM) Holdings, and may refer, for example, to a heterogeneous computing structure that includes, for example, low-performance or little cores with lower power consumption and high-performance or big cores with higher power consumption. The low-performance cores and the high-performance cores may have different versions of ISA. For example, Cortex-A72, Cortex-A73, and Cortex-A75, which have high performance in the ARM series, may have different versions of ISA.

In an example, the cores of the HMP may be classified into a plurality of clusters. Each cluster may have one or more of the ISAs 240. The ISAs 240 may include a set of instructions. For example, a set of instructions designed by the ARM Holdings. For example, the ISAs 240 may include, but are not limited to, ARM v7, ARM v8, and ARM v9. Here, v7, v8, and v9 may refer, for example, to the versions of ISA. The larger the number, the higher the version.

In an example, a higher version ISA may include a lower version ISA. For example, ARM v9 may include ARM v7 and ARM v8. Each version of ISA may be divided into more detailed versions. For example, ARM v8 may be divided into v8.0, v8.1, v8.2, and v8.3.

In another example, a higher version ISA may not include a lower version ISA. For example, ARM v9 may not include ARM v7 in which an instruction architecture is formed of 32 bits.

The compiler 210 may include various executable program elements and/or processing circuitry and compiles an executable file (e.g., a task) of an application (e.g., the application 146 in FIG. 1) using one of the ISAs 240 to create an executable file written in a machine language that can be understood by at least one core of the processors 120. For example, when a high-level language instruction "7*5" is compiled (e.g., built) with the first ISA having the addition operation, a machine language instruction "add 7 five times" may be created. On the other hand, when it is compiled with the second ISA having the addition and multiplication operations, a machine language instruction such as "add 7 five times" or "multiply 7 by 5" may be created.

In various examples, the compiler 210 may record version information of ISA, used when performing compiling, in a header of the compiled executable file. According to an example, the kernel (e.g., the operating system 142 in FIG. 1) may manage tasks, allocated to the core by the scheduler 220, as a task structure that is information in the kernel. When the compiled task (e.g., executable file) is executed, the kernel may add version information of ISA, used in compiling the task, to the task structure. Therefore, the scheduler 220 may check the version information from the task structure and allocate the task to the core. In the task structure, the header of each task may contain the version information of ISA used when the task is compiled, in addition to information indicating the type of task (e.g., 32-bit or 64-bit). For example, when the application is executed, the compiler 210 may record an ISA name such as ARM v7, ARM v8, or ARM v9 in the header of the task. Also, the compiler 210 may record detailed version information (e.g., ARM v8.3) in the header.

When executing a specific instruction of the executable file, the processor 120 may exhibit different performance depending on the version of ISA used in compiling the specific instruction. For example, in a certain module or library such as encoding, decoding, or floating operation, the higher the ISA version, the faster and more energy-efficiently processible instruction may be added. Thus, the processor 120 (e.g., HMP) can perform faster and more energy-efficient instruction processing when using a higher version of ISA.

In various examples, when compiling an executable file using one of the ISAs 240, the compiler 210 may compile, using another ISA (e.g., a higher-version ISA), a specific instruction (e.g., a program code or function) (e.g., a specific module or library) designated in a program (e.g., instructions) written in a high-level language.

According to an example, when writing a program in a high-level language, a program developer may designate a specific instruction corresponding to a specific version of ISA through a preprocess statement. For example, the specific instruction to be compiled with the specific version of ISA may be placed in the preprocess statement. Therefore, the compiler 210 may compile the specific instruction in the preprocess statement with the specific version of ISA.

According to another example, when compiling an executable file (e.g., task), the compiler 210 may receive topology regarding a chipset structure of the processor 120 through an option provided to the compiler 210. Based on the received topology, the compiler 210 may add affinity-related instructions to the task such that the task can be allocated to a core capable of processing a specific instruction compiled with a specific version of ISA. The compiler 210 may compile a specific instruction (e.g., a library or specific block of code) in an executable file with the specific version of ISA, based on the topology of cores without developer intervention.

In various examples, the scheduler 220 may determine a core to execute an executable file from among cores of the processor 120, based on version information recorded in the header of the executable file. According to an example, when selecting the core to execute the executable file, the scheduler 220 may obtain hints from the version information and the topology of cores. For example, the scheduler 220 may identify the version information in the header of the executable file, and also identify the topology of cores through, for example, the kernel. Based on the identified topology and version information, the scheduler 220 may select one or more candidates from among the cores. In addition, the scheduler 220 may allocate the executable file to one core among the candidates, thereby preventing and/or avoiding the executable file from being allocated to a core incapable of understanding machine language instructions compiled with a specific version of ISA.

In various examples, the scheduler 210 may identify the specific instruction (e.g., a specific module or library) in the executable file, and allocate the identified instruction to a core having a different version of ISA other than to a core having the version of ISA recorded in the header. Therefore, faster and more energy-efficient processing can be expected in the processing of the specific instruction.

When an application is executed in the processor 120, various kinds of exceptions may occur as exceptional situations. For example, a specific instruction may not be decoded in a core (e.g., a little core) allocated by the scheduler 210, so that the core may abort the execution of the instruction. For handling such exceptions (e.g., resolving an execution abort), it may be set to call (e.g., trap) a hypervisor (e.g., exception level 2 (EL2) in ARM v8). Such a call may be set when the electronic device 101 is booted.

In various examples, the exception handler 230 is a module including, for example, a hypervisor and/or a kernel and may support exception handling by being called when an exception occurs. For example, the exception handler 230 may transfer a task (the execution of instructions) to another core capable of decoding instructions. Also, the exception handler 230 may convert (or emulate) an instruction into another instruction that can be decoded by a core causing the execution abort.

According to an example, the exception handler 230 may transfer a task to a core (e.g., a big core) having a higher version of ISA than that of ISA of the core causing the execution abort. When a condition for transferring a task to another core is not satisfied (e.g., when such a target core is busy while executing instructions), the exception handler 230 may convert (or emulate) an instruction into another instruction that can be decoded by a core causing the execution abort. For example, the exception handler 230 may convert a machine language instruction "multiply 7 by 5" into another machine language instruction "add 7 five times".

According to an example, the exception handler 230 may count the number of emulations. In addition, based at least on the occurrence of execution abort, the exception handler 230 may determine whether the number of emulations reaches a predetermined threshold. When the number of emulations reaches the threshold, the exception handler 230 may transfer a task to another core. When the number of emulations is less than the threshold, the exception handler 230 may emulate an instruction.

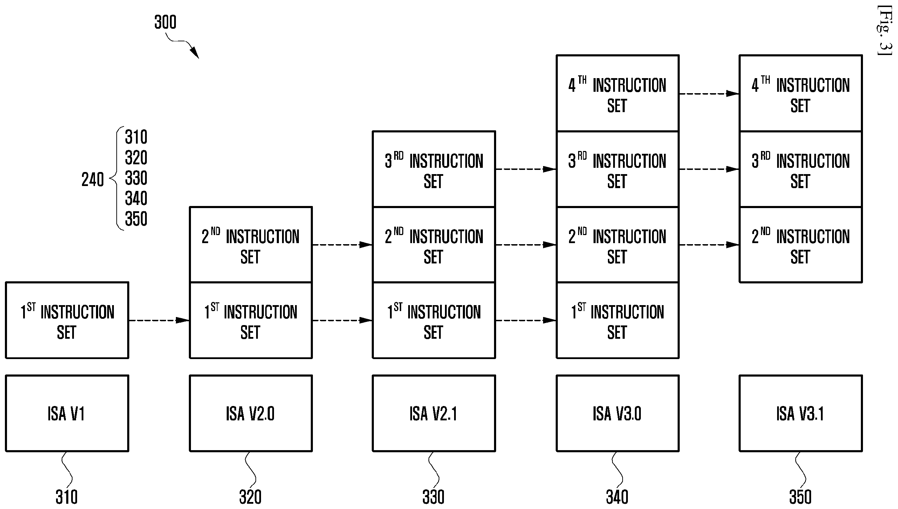

FIG. 3 is a diagram illustrating example ISAs 240 of a processor 120 according to various examples.

Referring to FIG. 3, the ISAs 240 may include ISA v1 310, ISA v2.0 320, ISA v2.1 330, ISA v3.0 340, and/or ISA v3.1 350. Here, v1, v2, and v3 indicate versions of ISAs. The larger the number, the higher the version. For example, the ISA v1 310 may include a first instruction set having an instruction architecture of, for example, 32 bits. The ISA v2.0 320 may include the ISA v1 310 and a second instruction set of, for example, 62 bits. The ISA v2.1 330 may include the ISA v2.0 320 and a third instruction set of, for example, 62 bits. The ISA v3.0 340 may include the ISA v2.1 330 and a fourth instruction set of, for example, 62 bits. The ISA v3.1 350 may include the rest of the ISA v3.0 340 except for the first instruction set. The above numbers indicating the version of ISA are only examples, and the numbers themselves do not limit the disclosure.

In an example, each core of the processor 120 may include one of the ISAs 240. For example, the processor 120 may include a core capable of understanding and executing a machine language instruction written based on the ISA v1 310, a core capable of understanding and executing a machine language instruction written based on the ISA v2.0 320, a core capable of understanding and executing a machine language instruction written based on the ISA v2.1 330, a core capable of under- standing and executing a machine language instruction written based on the ISA v3.0 340, and/or a core capable of understanding and executing a machine language instruction written based on the ISA v3.1 350.

In an example, the cores of the processor 120 may be classified into a plurality of clusters, each cluster having one or more of the ISAs 240. For example, the processor 120 may include a first cluster having the ISA v1 310 and the ISA v2.0 320, a second cluster having the ISA v1 310, the ISA v2.0 320, and the ISA v2.1 330, and a third cluster having the ISA v2.0 320, the ISA v2.1 330, and the ISA v3.0 340. The third cluster may have the ISA v3.1 350 instead of the ISA v3.0 340.

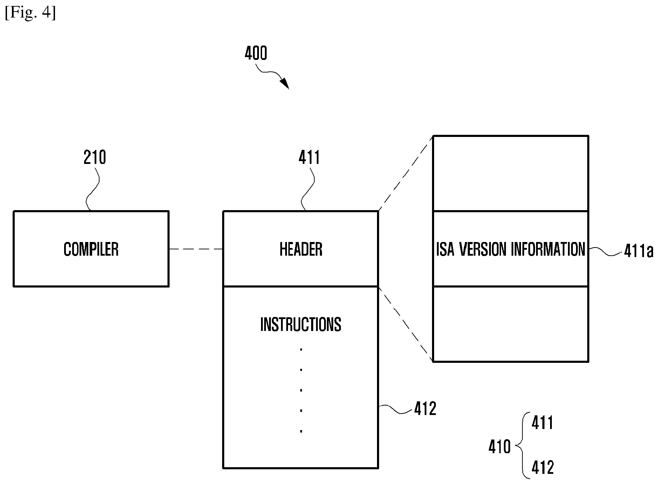

FIG. 4 is a diagram 400 illustrating example operations of a compiler 210 according to various examples.

Referring to FIG. 4, the compiler 210 may compile an executable file 410 using one of the ISAs 240. The compiled executable file 410 may include a header 411 and machine language instructions 412. The compiler 210 may add version information 411a of the ISA, used in compiling, to the header 411.

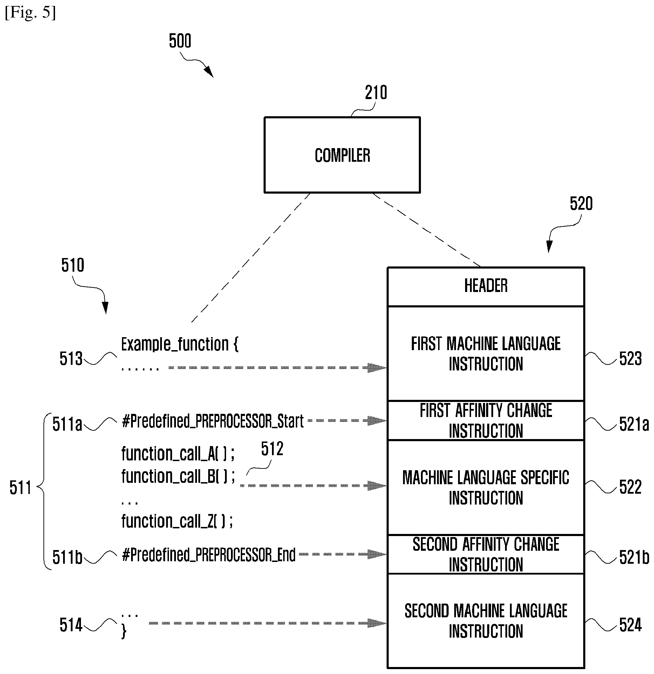

FIG. 5 is a diagram 500 illustrating example operations of a compiler 210 according to various examples.

Referring to FIG. 5, the compiler 210 may compile a first executable file 510 written in a high-level language into a second executable file 520 using a plurality of ISAs among the ISAs 240.

The compiler 210 may identify a preprocess statement 511 in the first executable file 510. A high-level language specific instruction 512 may be located within the preprocess statement 510. The preprocess statement 510 may include a start portion 511a indicating that the high-level language specific instruction 512 will be started, and an end portion 511b indicating that the high-level language specific instruction is ended.

The compiler 210 may change a core affinity, based on identifying the preprocess statement 511. According to an example, the compiler 210 may change the ISA to be used in compiling instructions. For example, using one of the ISAs 240, the compiler 210 may convert a first high-level language instruction 513 into a first machine language instruction 523. In addition, the compiler 210 may convert the start portion 511a into a first affinity change instruction 521a that can be understood by a core having the ISA used in compiling the first high-level language instruction 513. Also, using another the ISA (e.g., a higher version ISA), the compiler 210 may convert the high-level language specific instruction 512 into a machine language specific instruction 522. In addition, the compiler 210 may convert the end portion 511b into a second affinity change instruction 521b that can be understood by a core having the ISA used in compiling the high-level language specific instruction 512. Also, using the ISA used in compiling the first high-level language instruction 513, the compiler 210 may convert a second high-level language instruction 514 into a second machine language instruction 524.

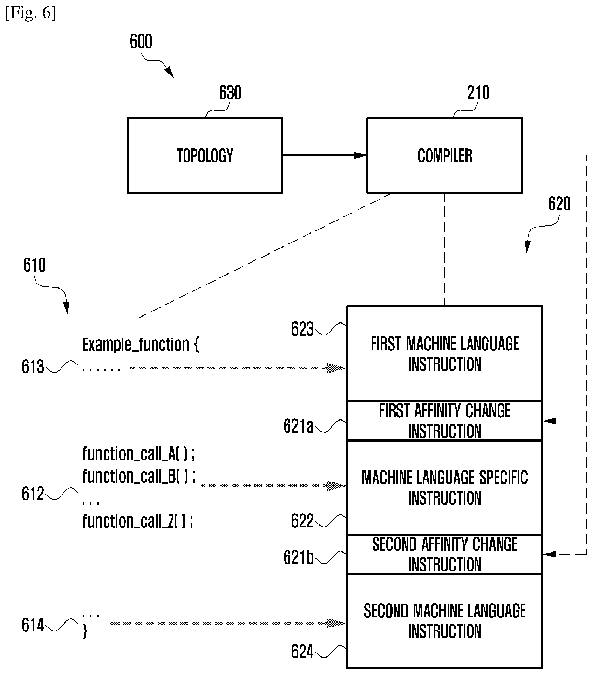

FIG. 6 is a diagram 600 illustrating example operations of a compiler 210 according to various examples.

Referring to FIG. 6, the compiler 210 may compile a first executable file (high-level language instructions) 610 written in a high-level language into a second executable file (machine language instructions) 620 using a plurality of ISAs among the ISAs 240.

When compiling the first executable file 610, the compiler 210 may receive a topology 630 from a kernel (e.g., the operating system 142 in FIG. 1) through, for example, an option provided to the compiler 210. The topology 630 may include information indicating a corresponding relationship between the cores of the processor 120 and the ISAs 240.

The compiler 210 may change a core affinity, based on identifying the topology 630. For example, the compiler 210 may determine the ISA to be used in compiling a high-level language specific instruction 612 by referring to the topology 630.

The compiler 210 may compile a first high-level language instruction 613 and a second high-level language instruction 614 into a first machine language instruction 623 and a second machine language instruction 624, respectively, using one of the ISAs 240. In addition, using the determined ISA, the compiler 210 may convert the high-level language specific instruction 612 into a machine language specific instruction 622. In addition, the compiler 210 may add, between the first machine language instruction 623 and the machine language specific instruction 622, a first affinity change instruction 621a that can be understood by a core having the ISA used in compiling the first high-level language instruction 613. Also, the compiler 210 may add, between the machine language specific instruction 622 and the second machine language instruction 624, a second affinity change instruction 621b that can be understood by a core having the ISA used in compiling the machine language specific instruction 622.

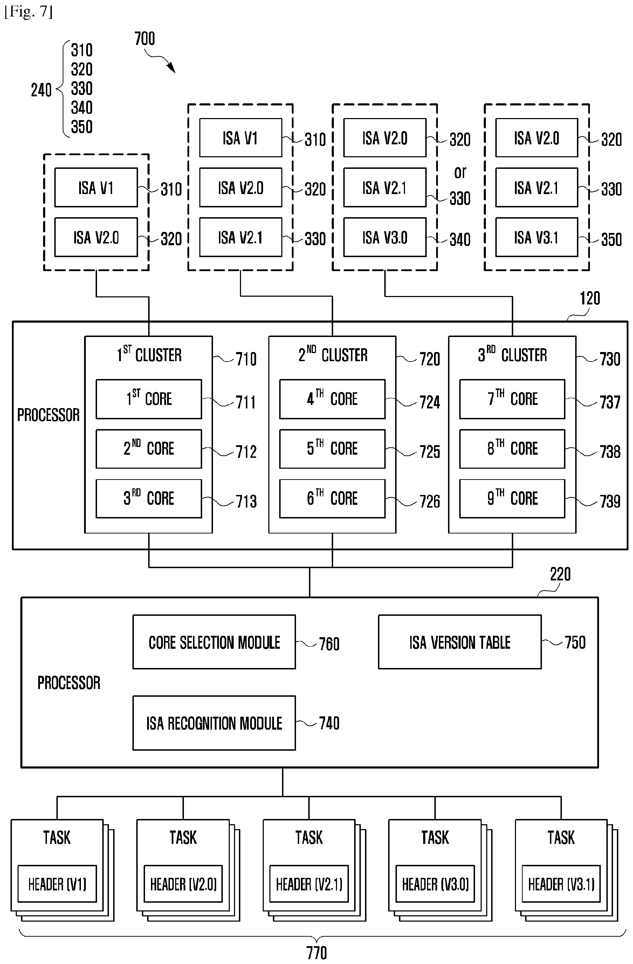

FIG. 7 is a diagram 700 illustrating example operations of a scheduler 220 according to various examples.

Referring to FIG. 7, the processor 120 may include a first cluster 710, a second cluster 720, and a third cluster 730. The first cluster 710 may include a first core 711, a second core 712, and a third core 713, and may understand and execute a task (e.g., an executable file) compiled using ISA v1 310 or ISA v2.0 320. The second cluster 720 may include a fourth core 724, a fifth core 725, and a sixth core 726, and may understand and execute a task compiled using ISA v1 310, ISA v2.0 320, or ISA v2.1 330. The third cluster 730 may include a seventh core 737, an eighth core 738, and a ninth core 739, and may understand and execute a task compiled using ISA v2.0 320, ISA v2.1 330, or ISA v3.0 340. In a certain example, the third cluster 730 may understand and execute a task compiled using ISA v3.1 350 instead of ISA v3.0 340.

The scheduler 220 may include an ISA recognition module 740, an ISA version table 750, and a core selection module 760. Tasks 770 may be compiled in advance by the compiler 210 and stored in a memory (e.g., the memory 130 in FIG. 1). The tasks 770 may be included in a task structure by an operating system (e.g., the operating system 142 in FIG. 1), and may be classified and managed according to the ISA version (e.g., the version recorded in the header) used in compiling.

In various examples, the ISA recognition module 740 may recognize the version of ISA used when the compiler 210 compiles the task. For example, the ISA recognition module 740 may recognize the version of ISA from the header of the task. When an affinity change instruction (e.g., the first affinity change instruction 521a in FIG. 5 or the first affinity change instruction 621a in FIG. 6) is executed, the ISA recognition module 740 may recognize the version of ISA related to a specific instruction (e.g., the specific instruction 522 in FIG. 5 or the specific instruction 622 in FIG. 6).

In various examples, the ISA version table 750 (e.g., the topology 630 in FIG. 6) may have a corresponding relationship (e.g., Table 1 below) between the cores 711, 712, 713, 724, 725, 726, 737, 738, and 739 and the ISAs 240.

**[Table 1]**

| | | |
|---|---|---|
| 1^{st} Cluster 710 | 1^{st} Core 711 | ISA v1 310, ISA v2.0 320 |
| | 2^{nd} Core 712 | |
| | 3^{rd} Core 713 | |
| 2^{nd} Cluster 720 | 4^{th} Core 724 | ISA v1 310, ISA v2.0 320, ISA v2.1 330 |
| | 5^{th} Core 725 | |
| | 6^{th} Core 726 | |
| 3^{rd} Cluster 730 | 7^{th} Core 737 | ISA v2.0 320, ISA v2.1 330, ISA v3.0 340(or ISA v3.1 350) |
| | 8^{th} Core 738 | |
| | 9^{th} Core 739 | |

In various examples, the core selection module 760 may select, from among the clusters 710, 720, and 730, one or more candidates capable of executing a task or a specific instruction (e.g., the specific instruction 522 in FIG. 5 or the specific instruction 622 in FIG. 6) in the task, based on the version recognized by the ISA recognition module 740 and the ISA version table 750.

According to an example, based on the recognized version and the ISA version table 750, the core selection module 760 may create mask information as a list of candidates capable of understanding and executing the task or specific instruction. Based on the mask information, the core selection module 760 may determine a cluster to execute the task or specific instruction, and allocate the task or specific instruction the determined cluster. For example, when the recognized version is v2.1, the core selection module 760 may determine the second cluster 720 and the third cluster 730 as candidates and then allocate the task or specific instruction to one of them.

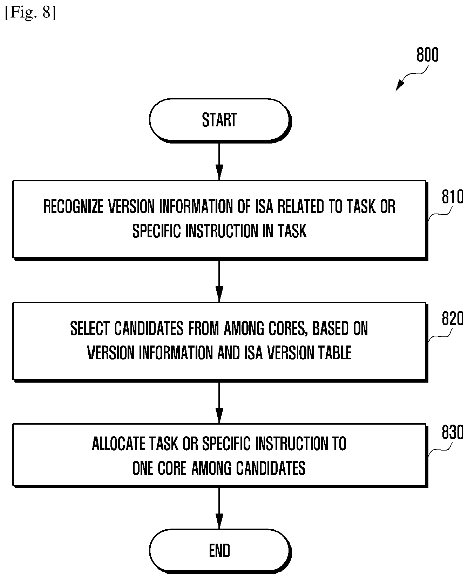

FIG. 8 is a flowchart illustrating operations 800 of a processor 120 according to various examples.

The scheduler 220 may include instructions that, when executed, cause the processor 120 to perform the operations 800.

At operation 810, the processor 120 may recognize a version of ISA related to a task to be executed or a specific instruction in the task (e.g., the specific instruction 522 in FIG. 5 or the specific instruction 622 in FIG. 6). For example, the processor 120 may recognize the version of ISA from the header of the task. The processor 120 may recognize the version of ISA associated with the specific instruction by executing an affinity change instruction in the task (e.g., the first affinity change instruction 521a in FIG. 5 or the first affinity change instruction 621a in FIG. 6).

At operation 820, the processor 120 may select, from among cores, one or more candidates capable of executing the task or the specific instruction, based on the recognized version and an ISA version table (e.g., the ISA version table 750 in FIG. 7).

At operation 830, the processor 120 may allocate the task or the specific instruction to one core among the selected candidates.

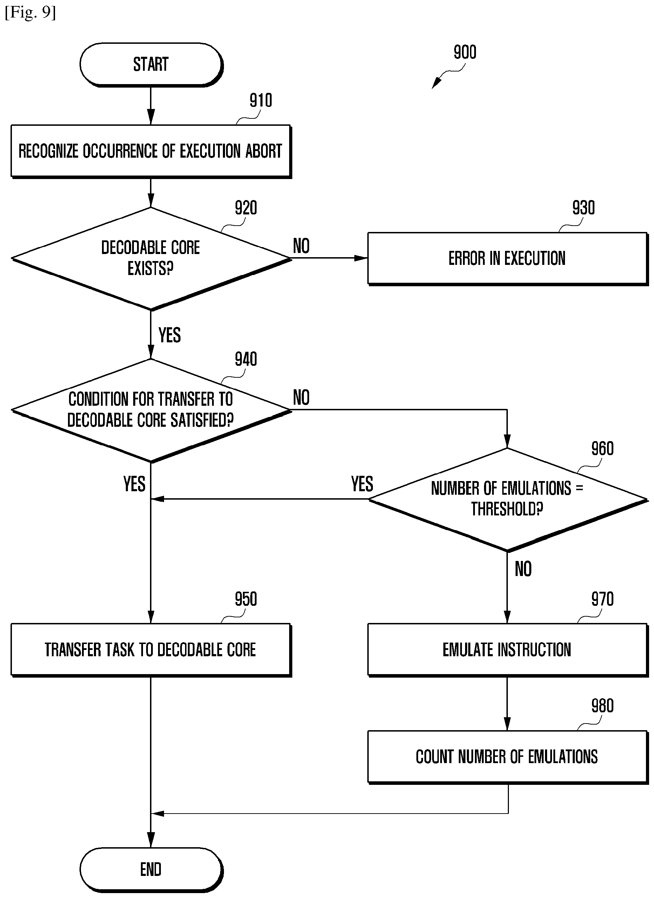

FIG. 9 is a flowchart illustrating operations 900 of a processor 120 according to an embodiment of the invention.

While the processor 120 is executing an application, an execution abort may occur. For example, when a task is allocated to, by the scheduler 210, and executed in one of cores (e.g., a little core) of the processor 120, a certain instruction of the task may not be able to be decoded, and thereby an execution abort may occur. In order to address such an execution abort, the exception handler 230 is called, for example, when the electronic device 101 is booted. The exception handler 230 may include instructions that, when executed, cause the processor 120 to perform the operations 900.

At operation 910, the processor 120 recognizes the occurrence of execution abort.

At operation 920, the processor 120 determines whether another core (hereinafter, decodable core) capable of decoding an aborted instruction exists among cores of the processor 120. If it is determined at the operation 920 that the decodable core does not exist, the processor 120 may determine at operation 930 that there is an error in the execution of the application.

According to various examples, a kernel (e.g., the operating system 142 in FIG. 1) may set core structure information of the electronic device 101 and store version information of ISA available for each core. Using the stored version information of ISA, the kernel may determine whether there is the decodable core. For example, the kernel may determine that a core having an ISA of a higher version than that of an ISA of a core causing the execution abort is the decodable core.

In an example, the processor 120 may determine, as the decodable core, a core having higher performance (e.g., a big core) than that of a core causing the execution abort.

In an example, based on the version information of the ISAs 240, the processor 120 may determine one of the cores of the processor 120 as the decodable core. For example, the processor 120 may determine, as the decodable core, a core having an ISA of a higher version than that of an ISA of a core causing the execution abort. In another example, the processor 120 may determine, as the decodable core, a core having the second ISA including the first ISA of a core causing the execution abort. For example, if the first ISA is ISA v1 310, the second ISA may be determined as ISA v2.0 320, ISA v2.1 330, or ISA v3 340 except for ISA v3.1 350.

If it is determined at the operation 920 that the decodable core exists, the processor 120 determines at operation 940 whether a condition for transferring a task to the decodable core is satisfied. The condition is that the decodable core is in a state of waiting to perform a task.

When the condition is determined to be satisfied at the operation 940, the processor 120 transfers the task (instruction execution) to the decodable core at operation 950 to resolve the execution abort.

When the condition is determined to be not satisfied at the operation 940 (e.g., when the decodable core is in a busy state), the processor 120 determines at operation 960 whether the number of emulations equals a predetermined threshold.

If it is determined at the operation 960 that the number of emulations is less than the threshold, the processor 120 emulates the instruction at operation 970 to resolve the execution abort. At operation 980, the processor 120 may count the number of emulations.

If it is determined at the operation 960 that the number of emulations equals the threshold, the processor 120 performs the operation 950 to transfer the task to the decodable core.

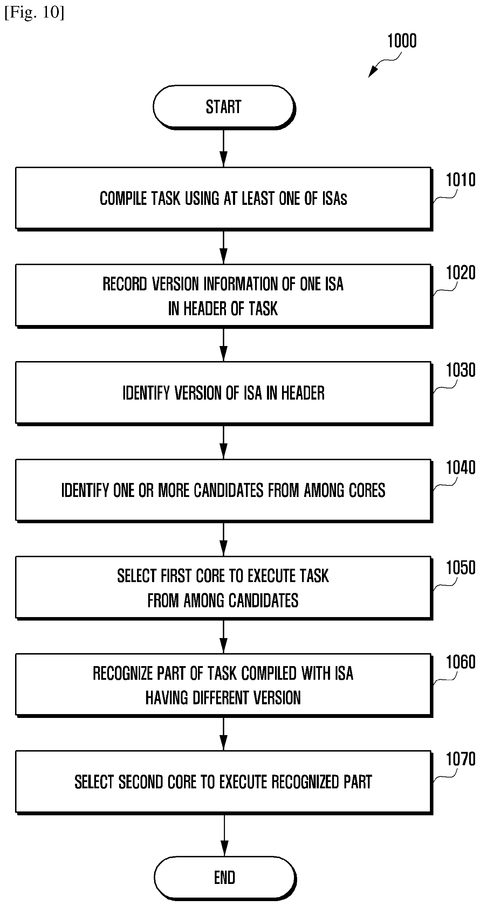

FIG. 10 is a flowchart illustrating example operations 1000 of a processor 120 according to various examples useful for understanding of the disclosure.

The compiler 210 and the scheduler 220 may include instructions that, when executed, cause the processor 120 to perform the operations 1000.

At operation 1010, the processor 120 may compile a task using at least one of the ISAs 240.

At operation 1020, the processor 120 may record, in a header of the task, information indicating a version of one of the at least one ISA used in compiling. For example, some of instructions of the task may be compiled with a first ISA, and the others (e.g., a specific instruction) may be compiled with a second ISA. The version of the second ISA may be higher than that of the first ISA, and the processor 120 may record information indicating the version of the first ISA in the header. Additionally, the processor 120 may add, to the compiled task, an affinity change instruction for identifying the other instructions compiled with the second ISA.

At operation 1030, the processor 120 may identify the version of ISA in the header.

At operation 1040, the processor 120 may identify one or more candidates capable of understanding the identified version of ISA from among cores of the processor 120. For example, the processor 120 may identify one or more candidates capable of decoding the identified version of ISA among the cores, for example, by referring to a table (e.g., the ISA version table 750 in FIG. 7) showing a corresponding relationship between the cores and the ISAs.

At operation 1050, the processor 120 may select a first core to execute the task from among the identified candidates.

At operation 1060, the processor 120 may recognize that a part of the task is compiled with an ISA having a version (e.g., a higher version) different from the identified version. For example, the processor 120 may recognize another part compiled with the second ISA by decoding and executing an affinity change instruction.

At operation 1070, the processor 120 may select a second core capable of understanding and executing the recognized part from among the rest cores other than the first core.

The operations 1060 and 1070 may be omitted when all instructions of the task are compiled with one ISA.

According to various examples of the disclosure, an electronic device may include: a processor including a plurality of cores, and a memory connected to the processor. The memory may store instructions which, when executed, cause the processor to: based on an abort of an execution of an instruction in a first core among the plurality of cores, determine whether a second core capable of executing the instruction exists in the plurality of cores, and transfer the execution of the instruction to the second core, based at least on determining that the second core exists among the plurality of cores.

The instructions, when executed, may cause the processor to transfer the execution of the instruction to the second core, further based on determining that a condition for transferring the execution of the instruction to the second core is satisfied, and the condition may include a state in which the second core is waiting to perform a task. The instructions, when executed, may cause the processor to emulate the instruction into an instruction executable in the first core, based at least on determining that the condition is not satisfied. The instructions, when executed, may cause the processor to emulate the instruction into an instruction executable in the first core, further based on determining that a number of emulations is less than a predetermined threshold. The instructions may cause the processor to transfer the execution of the instruction to the second core, based on determining that the number of emulations is the threshold.

The instructions, when executed, may cause the processor to determine a higher-performance core than the first core as the second core.

The instructions, when executed, may cause the processor to determine one of the plurality of cores as the second core, based on version information of instruction set architectures (ISAs). The instructions, when executed, may cause the processor to determine, as the second core, a core capable of decoding an ISA having a higher version than a version of an ISA decodable in the first core. The instructions, when executed, may cause the processor to determine, as the second core, a core capable of decoding a second ISA that includes a first ISA decodable in the first core.

According to various examples of the disclosure, an electronic device may include a processor including a plurality of cores, and a memory connected to the processor. The memory may store instructions which, when executed, cause the processor to: compile a task using at least one of plural instruction set architectures (ISAs), to record, in a header of the task, information indicating a version of one of the at least one ISAs used in the compiling, identify the version of ISA in the header, identify one or more candidate cores capable of decoding the identified version of ISA among the plurality of cores, and to select a first core to execute the task from among the identified candidate cores.

The instructions, when executed, may cause the processor to compile a part of instructions of the task with a first ISA, and compile another part of instructions of the task with a second ISA having a version higher than a version of the first ISA. The instructions, when executed, may cause the processor to record information indicating the version of the first ISA in the header. The instructions, when executed, may cause the processor to add, to the compiled task, an affinity change instruction configured to identify the another part compiled with the second ISA. The instructions, when executed, may cause the processor to recognize the another part compiled with the second ISA by executing the affinity change instruction, and to select the second core to execute the another part from among one or more cores capable of decoding the second ISA. The instructions, when executed, may cause the processor to determine a higher-performance core than the first core as the second core.

According to various examples of the disclosure, a method for operating an electronic device may include: based on an abort of an execution of an instruction in a first core among a plurality of cores of a processor, determining whether a second core capable of executing the instruction exists in the plurality of cores; and transferring the execution of the instruction to the second core, based at least on determining that the second core exists among the plurality of cores.

The transferring may be performed further based on determining that a condition for transferring the execution of the instruction to the second core is satisfied, and the condition may include a state in which the second core is waiting to perform a task. The method may further include emulating the instruction into an instruction executable in the first core, based at least on determining that the condition is not satisfied. The emulating may be performed further based on determination that a number of emulations is less than a predetermined threshold.

According to various examples of the disclosure, a method for operating an electronic device may include: compiling a task using at least one of plural instruction set architectures (ISAs); recording, in a header of the task, information indicating a version of one of the at least one ISAs used in the compiling; identifying the version of ISA in the header; identifying one or more candidate cores capable of decoding the identified version of ISA among a plurality of cores of a processor of the electronic device; and selecting a first core to execute the task from among the identified candidate cores.

## Claims

1. An electronic device (101) comprising:
a processor (120) including a plurality of cores having different performance levels; and
a memory (130) connected to the processor (120),
wherein the memory (130) stores instructions which, when executed, cause the processor (120) to:
based on an abort of an execution of a first instruction in a first core among the plurality of cores, determine whether a second core capable of executing the first instruction exists in the plurality of cores;
based on determining (920, yes) that a second core capable of executing the first instruction exists in the plurality of cores, determine whether the second core is in a state of waiting to perform a task;
based on determining that the second core is in a state of waiting to perform a task, transfer (950) the execution of the first instruction to the second core, else:
determine a number of previous emulations associated with the first instruction;
based on determining that the number of previous emulations associated with the first instruction is equal to a predetermined threshold, transfer (950) the execution of the first instruction to the second core; and
based on determining (960, no) that the number of previous emulations associated with the first instruction is less than the predetermined threshold, emulate (970) the first instruction into a second instruction executable in the first core.

2. The electronic device (101) of claim 1, wherein the instructions, when executed, cause the processor (120) to determine a higher performance core than the first core as the second core.

3. The electronic device (101) of claim 1, wherein the instructions, when executed, cause the processor (120) to determine one of the plurality of cores as the second core, based on version information of instruction set architectures, ISAs.

4. The electronic device (101) of claim 3, wherein the instructions, when executed, cause the processor (120) to determine, as the second core, a core capable of decoding an ISA having a higher version than a version of an ISA decodable in the first core.

5. The electronic device (101) of claim 3, wherein the instructions, when executed, cause the processor (120) to determine, as the second core, a core capable of decoding a second ISA that includes a first ISA decodable in the first core.

6. A method of operating an electronic device, the method comprising:
based on an abort of an execution of a first instruction in a first core among a plurality of cores of a processor of the electronic device having different performance levels, determining whether a second core capable of executing the instruction exists in the plurality of cores;
based on determining (920, yes) that the second core capable of executing the instruction exists in the plurality of cores, determining whether the second core is in a state of waiting to perform a task;
based on determining that the second core is in a state of waiting to perform a task, transferring (950) execution of the first instruction to the second core, else:
determining a number of previous emulations associated with the first instruction;
based on determining that the number of previous emulations associated with the first instruction is equal to a predetermined threshold, transferring (950) the execution of the first instruction to the second core; and
based on determining (960, no) that the number of previous emulations associated with the first instruction is less than the predetermined threshold, emulating (970) the first instruction into a second instruction executable in the first core.

## Patentansprüche

1. Elektronische Vorrichtung (101), umfassend:
einen Prozessor (120), der eine Vielzahl von Kernen beinhaltet, die unterschiedliche Leistungsstufen aufweisen; und
einen Speicher (130), der mit dem Prozessor (120) verbunden ist,
wobei der Speicher (130) Befehle speichert, die, wenn sie ausgeführt werden, den Prozessor (120) zu Folgendem veranlassen:
basierend auf einem Abbruch einer Ausführung eines ersten Befehls in einem ersten Kern unter der Vielzahl von Kernen, Bestimmen, ob es in der Vielzahl von Kernen einen zweiten Kern gibt, der den ersten Befehl ausführen kann;
Basierend auf einem Bestimmen (920, ja), dass es in der Vielzahl von Kernen einen zweiten Kern gibt, der in der Lage ist, den ersten Befehl auszuführen, Bestimmen, ob der zweite Kern in einem Wartezustand ist, um eine Aufgabe auszuführen,
Basierend auf einem Bestimmen, dass der zweite Kern in einem Wartezustand ist, um eine Aufgabe auszuführen, Übertragen (950) der Ausführung des ersten Befehls an den zweiten Kern, sonst:
Bestimmen einer Anzahl früherer Emulationen, die mit dem ersten Befehl assoziiert sind;
basierend auf einem Bestimmen, dass die Anzahl früherer Emulationen, die mit dem ersten Befehl assoziiert sind, gleich ist wie ein vorbestimmter Schwellenwert, Übertragen (950) der Ausführung des ersten Befehls an den zweiten Kern; und
basierend auf einem Bestimmen (960, nein), dass die Anzahl früherer Emulationen, die mit dem ersten Befehl assoziiert sind, geringer ist als der vorbestimmte Schwellenwert, Emulieren (970) des ersten Befehls in einen zweiten Befehl, der in dem ersten Kern ausgeführt werden kann.

2. Elektronische Vorrichtung (101) nach Anspruch 1, wobei die Befehle, wenn sie ausgeführt werden, den Prozessor (120) veranlassen, einen Kern höherer Leistung als der erste Kern als den zweiten Kern zu bestimmen.

3. Elektronische Vorrichtung (101) nach Anspruch 1, wobei die Befehle, wenn sie ausgeführt werden, den Prozessor (120) veranlassen, basierend auf Versionsinformationen von Befehlssatzarchitekturen, ISAs, einen der Vielzahl von Kernen als den zweiten Kern zu bestimmen.

4. Elektronische Vorrichtung (101) nach Anspruch 3, wobei die Befehle, wenn sie ausgeführt werden, den Prozessor (120) veranlassen, als zweiten Kern einen Kern zu bestimmen, der in der Lage ist, eine ISA zu dekodieren, die eine höhere Version als eine Version einer ISA aufweist, die in dem ersten Kern dekodierbar ist.

5. Elektronische Vorrichtung (101) nach Anspruch 3, wobei die Befehle, wenn sie ausgeführt werden, den Prozessor (120) veranlassen, einen Kern als zweiten Kern zu bestimmen, der in der Lage ist, eine zweite ISA zu dekodieren, die eine erste ISA beinhaltet, die in dem ersten Kern dekodierbar ist.

6. Verfahren zum Betreiben einer elektronischen Vorrichtung, das Verfahren umfassend:
basierend auf einem Abbruch einer Ausführung eines ersten Befehls in einem ersten Kern unter der Vielzahl von Kernen eines Prozessors der elektronischen Vorrichtung, der unterschiedliche Leistungsstufen aufweist, Bestimmen, ob es in der Vielzahl von Kernen einen zweiten Kern gibt, der in der Lage ist, den Befehl auszuführen,
Basierend auf einem Bestimmen (920, ja), dass es in der Vielzahl von Kernen den zweiten Kern gibt, der in der Lage ist, den Befehl auszuführen, Bestimmen, ob der zweite Kern in einem Wartezustand ist, um eine Aufgabe auszuführen;
Basierend auf einem Bestimmen, dass der zweite Kern in einem Wartezustand ist, um eine Aufgabe auszuführen, Übertragen (950) einer Ausführung des ersten Befehls an den zweiten Kern, sonst:
Bestimmen einer Anzahl früherer Emulationen, die mit dem ersten Befehl assoziiert sind;
basierend auf einem Bestimmen, dass die Anzahl früherer Emulationen, die mit des ersten Befehls assoziiert sind, gleich ist wie ein vorbestimmter Schwellenwert, Übertragen (950) der Ausführung des ersten Befehls an den zweiten Kern; und
basierend auf einem Bestimmen (960, nein), dass die Anzahl früherer Emulationen, die mit dem ersten Befehl assoziiert sind, geringer ist als der vorbestimmte Schwellenwert, Emulieren (970) des ersten Befehls in einen zweiten Befehl, der in dem ersten Kern ausgeführt werden kann.

## Revendications

1. Dispositif électronique (101) comprenant :
un processeur (120) comprenant une pluralité de coeurs comportant différents niveaux de performances ; et
une mémoire (130) connectée au processeur (120),
dans lequel la mémoire (130) stocke des instructions qui, lorsqu'elles sont exécutées, amènent le processeur (120) à :
sur la base d'un abandon d'exécution d'une première instruction dans un premier coeur parmi la pluralité de coeurs, déterminer si un deuxième coeur capable d'exécuter la première instruction existe dans la pluralité de coeurs ;
sur la base de la détermination (920, oui) qu'un deuxième coeur capable d'exécuter la première instruction existe dans la pluralité de coeurs, déterminer si le deuxième coeur est dans un état d'attente pour exécuter une tâche ;
sur la base de la détermination que le deuxième coeur est dans un état d'attente pour exécuter une tâche, transférer (950) l'exécution de la première instruction au deuxième coeur, sinon :
déterminer un nombre d'émulations précédentes associées à la première instruction ;
sur la base de la détermination que le nombre d'émulations précédentes associées à la première instruction est égal à un seuil prédéterminé, transférer (950) l'exécution de la première instruction au deuxième coeur ; et
sur la base de la détermination (960, non) que le nombre d'émulations précédentes associées à la première instruction est inférieur au seuil prédéterminé, émuler (970) la première instruction en une seconde instruction exécutable dans le premier coeur.

2. Dispositif électronique (101) selon la revendication 1, dans lequel les instructions, lorsqu'elles sont exécutées, amènent le processeur (120) à déterminer un coeur aux performances supérieures à celles du premier coeur en tant que deuxième coeur.

3. Dispositif électronique (101) selon la revendication 1, dans lequel les instructions, lorsqu'elles sont exécutées, amènent le processeur (120) à déterminer l'un de la pluralité de coeurs en tant que deuxième coeur, sur la base d'informations de version des architectures de jeu d'instructions, ISA.

4. Dispositif électronique (101) selon la revendication 3, dans lequel les instructions, lorsqu'elles sont exécutées, amènent le processeur (120) à déterminer, en tant que deuxième coeur, un coeur capable de décoder une ISA comportant une version supérieure à une version d'une ISA décodable dans le premier coeur.

5. Dispositif électronique (101) selon la revendication 3, dans lequel les instructions, lorsqu'elles sont exécutées, amènent le processeur (120) à déterminer, en tant que deuxième coeur, un coeur capable de décoder une deuxième ISA qui comprend une première ISA décodable dans le premier coeur.

6. Procédé de fonctionnement d'un dispositif électronique, le procédé comprenant :
sur la base d'un abandon d'exécution d'une première instruction dans un premier coeur parmi une pluralité de coeurs d'un processeur du dispositif électronique comportant différents niveaux de performances, la détermination si un deuxième coeur capable d'exécuter l'instruction existe dans la pluralité de coeurs ;
sur la base de la détermination (920, oui) que le deuxième coeur capable d'exécuter l'instruction existe dans la pluralité de coeurs, la détermination si le deuxième coeur est dans un état d'attente pour exécuter une tâche ;
sur la base de la détermination que le deuxième coeur est dans un état d'attente pour exécuter une tâche, le transfert (950) d'exécution de la première instruction au deuxième coeur, sinon :
la détermination d'un nombre d'émulations précédentes associées à la première instruction ;
sur la base de la détermination que le nombre d'émulations précédentes associées à la première instruction est égal à un seuil prédéterminé, le transfert (950) de l'exécution de la première instruction au deuxième coeur ; et
sur la base de la détermination (960, non) que le nombre d'émulations précédentes associées à la première instruction est inférieur au seuil prédéterminé, l'émulation (970) de la première instruction en une seconde instruction exécutable dans le premier coeur.
